# EUROPÄISCHE PATENTSCHRIFT

(11) **EP 3 915 778 B1**
(45) Veröffentlichungstag und Bekanntmachung des Hinweises auf die Patenterteilung: **16.08.2023**
(21) Anmeldenummer: 20020252.1
(22) Anmeldetag: 27.05.2020
(51) Int. Cl.: B32B 7/023, B29C 48/07, B32B 3/18, B32B 27/08, B32B 27/18, B42D 25/00

(54) **KOEXTRUDIERTE FLUORESZIERENDE FOLIE**
COEXTRUDED FLUORESCENT FILM
FEUILLE FLUORESCENTE COEXTRUDÉE

(43) Veröffentlichungstag der Anmeldung: 01.12.2021
(73) Patentinhaber: Giesecke+Devrient Mobile Security GmbH, 81677 München (DE)
(72) Erfinder: Riedl, Josef, 85395 Attenkirchen (DE); Endres, Günter, 81547 München (DE)
(74) Vertreter: Giesecke + Devrient IP

(56) Entgegenhaltungen:
- EP-A1- 3 418 067
- EP-B1- 2 736 729
- DE-A1-102015 212 492

## Beschreibung

Die vorliegende Erfindung betrifft eine mehrschichtige koextrudierte Folie, ein Verfahren zur Herstellung einer mehrschichtigen koextrudierten Folie, sowie einen Datenträger mit einer koextrudierten Folie, die es ermöglicht, ein Sicherheitsmerkmal in den Datenträger einzubringen, das ihn fälschungssicher macht.

Datenträger im Sinne der Erfindung sind insbesondere Medien, mit denen der Nachweis einer Identität oder einer Berechtigung erbracht werden kann, wie zum Beispiel Reisepässe, Personalausweise, Führerscheine, Kredit- oder SIM-Karten oder dergleichen.

Sicherheitsmerkmale oder -elemente werden vielfach in Datenträgern eingesetzt, um diese gegen Fälschung bzw. Kopieren oder gegen Manipulation zu sichern. Generell können Sicherheitselemente unter anderem durch farblich komplexe Muster, Lasergravuren oder elektronische Bauelemente realisiert und mittels technisch aufwendiger Verfahren in die Datenträger eingebracht werden.

Aus der DE 10 2016 009 261 A1 ist ein Datenträger bekannt, der mindestens eine koextrudierte Streifenfolie aufweist. Die Streifenfolie ist aus alternierend und sich überlappend angeordneten Streifenschichten derart gebildet, dass durch die unterschiedliche Farbgebung der einzelnen Streifenschichten ein Sicherheitsmerkmal gegeben ist.

Aus der EP 3 470 236 A1 wiederum ist ein Datenträger und insbesondere ein Wert- oder Sicherheitsdokument bekannt, bei dem ein Sicherheitselement mittels lumineszierender Motivbereiche realisiert ist.

Aus der EP 3 418 067 A1 ist eine Schichtenanordnung zur Herstellung eines Wertdokuments mit sowohl einem Personalisierungsmerkmal als auch einem Sicherheitsmerkmal bekannt.

Aus der EP 2 736 729 B1 ist eine Datenträgerkarte bekannt, die einen Kartenkörper und einen in den Kartenkörper integrierten Sicherheitsfaden, sowie ein Verfahren zur Herstellung einer solchen Datenträgerkarte umfasst.

Aus der DE 10 2015 212 492 A1 ist ein Wertdokument mit einem Dokumentenkörper bekannt, wobei der Dokumentenkörper durch Laminieren von mindestens zwei miteinander verbundenen Polymerlagen hergestellt ist und mindestens einen Fensterbereich aufweist.

Es ist ein Nachteil der Herstellungsverfahren der bekannten Datenträger, dass das Einbringen verschiedener Sicherheitselemente in einem Datenträger mehrere unterschiedliche Herstellungsschritte erfordert, die gesondert und unabhängig voneinander vorgenommen werde müssen. So ist es oftmals notwendig, die verschiedenen Sicherheitsmerkmale einzeln in die jeweiligen Schichten einzubringen und anschließend die Schichten mittels Laminierverfahren zusammenzuführen bzw. zu verbinden

Insofern ist es die Aufgabe der vorliegenden Erfindung, eine Folie bereitzustellen, mittels der eine Kombination verschiedener Sicherheitsmerkmale realisiert und die mit geringem technischen Aufwand bereitgestellt werden kann. Es ist weiter eine Aufgabe der vorliegenden Erfindung, ein entsprechendes Verfahren zur Herstellung der Folie bereitzustellen. Ferner ist es eine Aufgabe der vorliegenden Erfindung, einen Datenträger bereitzustellen, der über eine höhere Fälschungssicherheit verfügt. Gelöst wird diese Aufgabe durch eine Folie, ein Verfahren zur Herstellung einer solchen Folie, sowie einen Datenträger gemäß den unabhängigen Ansprüchen. Die davon abhängigen Ansprüche spezifizieren vorteilhafte Ausgestaltungen und Weiterbildungen der Erfindung.

Gemäß einem ersten Aspekt der Erfindung wird eine mehrschichtige koextrudierte Folie vorgeschlagen. Die Folie, welche eine Vorderseite und eine Rückseite aufweist, umfasst mindestens drei Schichten, wobei die erste dieser Schichten oder/und die zweite dieser Schichten ein Laseradditiv umfasst sowie die zweite Schicht ein fluoreszierendes Additiv und die dritte dieser Schichten einen für UV-Strahlung undurchlässigen Bereich umfasst. Darüber hinaus umfasst die Folie eine vierte Schicht und eine fünfte Schicht. Dabei sind die vierte Schicht und die fünfte Schicht ausgehend von der dritten Schicht nacheinander in Richtung der Rückseite der Folie angeordnet. Die vierte und fünfte Schicht folgen also in dieser Reihenfolge auf die dritte Schicht. Vorzugsweise umfasst die vierte Schicht oder/und die fünfte Schicht ein Laseradditiv und die vierte Schicht ein fluoreszierendes Additiv.

Hierdurch wird eine Folie bereitgestellt, die verschiedene Sicherheitsmerkmale integriert und auf einfache Weise mittels Koextrusion hergestellt werden kann. Damit lassen sich nicht nur verschiedene Sicherheitselemente in die Folie einbringen, sondern auch einander überlagern, wodurch zusätzliche Effekte erzeugt werden können, die die Fälschungssicherheit noch weiter erhöhen. So können beispielsweise Lasergravuren, die in einer der Schichten eingebracht wurden, unter Bestrahlung der Folie mit UV-Licht fluoreszierend erscheinen.

Insbesondere weist die erfindungsgemäße Folie einen mehrschichtigen Aufbau mit Komponenten, wie zum Beispiel UV-Blockern, fluoreszierenden Pigmenten/ Farbstoffen und Laseradditiven auf, wobei die einzelnen Komponenten in den jeweiligen Schichten unterschiedlich ausgeprägt sein können.

So kann die dritte Schicht ebenfalls ein Laseradditiv umfassen. Darüber hinaus kann die erste Schicht ebenfalls ein fluoreszierendes Additiv umfassen.

Durch Verwenden eines Laseradditivs in mindestens einer der Schichten lassen sich dauerhafte Markierungen, wie beispielsweise personalisierte Daten und/oder Fotos, mittels Laserbestrahlung in die mit einem Laseradditiv versehenen Schichten der Folie flächenbegrenzt optimal einbringen.

Durch Ausstatten weiterer Schichten mit einem fluoreszierenden Additiv lassen sich weitere Farbeffekte realisieren.

Gemäß einer bevorzugten Ausgestaltung ist die mehrschichtige Folie derart ausgebildet, dass die erste Schicht, die zweite Schicht und die dritte Schicht ausgehend von der Vorderseite der Folie nacheinander in Richtung der Rückseite der Folie angeordnet sind. Beginnend mit der Vorderseite der Folie sind die erste, zweite und dritte Schicht also in dieser Reihenfolge aufeinanderfolgend in Richtung der Rückseite angeordnet.

Vorzugsweise umfassen die zweite Schicht und die vierte Schicht farblich unterschiedlich fluoreszierende Additive.

Durch das Verwenden von zwei unterschiedlich farbig fluoreszierenden Additiven leuchten unter UV-Licht die Vorderseite und die Rückseite der Folie farblich unterschiedlich, während Informationen in der mit einem Laseradditiv versehenen Schicht sichtbar gemacht werden, die dort zuvor mittels Laser eingebracht wurden. Eine derart aufgebaute Folie kann als Einsatz für ein Fenster in einen Datenträger verwendet werden.

Vorzugsweise können die erste Schicht und die fünfte Schicht fluoreszierende, insbesondere farblich unterschiedliche Additive umfassen.

Vorzugsweise erstreckt sich der für UV-Strahlung undurchlässige Bereich der dritten Schicht über die gesamte dritte Schicht. Dadurch wird verhindert, dass bei Bestrahlung der Vorder- oder Rückseite der Folie mit UV-Strahlung die auf der jeweils gegenüberliegenden Seite angeordnete fluoreszierende Schicht zur Lumineszenz angeregt wird.

In einer bevorzugten Ausgestaltung der Folie kann jedoch die dritte Schicht zumindest einen für UV-Strahlung durchlässigen Bereich umfassen. Vorzugsweise umfasst die dritte Schicht zumindest einen weiteren für UV-Strahlung undurchlässigen Bereich, wobei die für UV-Strahlung durchlässigen Bereiche und die für UV-Strahlung undurchlässige Bereiche alternierend angeordnet sind.

Durch eine derartige Unterbrechung oder "Penetration" des UV-Blockers entstehen sogenannte Durchlicht-Auflicht-Effekte, wie sie beispielsweise in Banknoten als Sicherheitsmerkmale zur Verwendung kommen. Außerdem lässt sich dadurch mit farblich unterschiedlich fluoreszierenden Additiven der zweiten und vierten Schicht, beziehungsweise der ersten und fünften Schicht, eine Sekundärfarbe erzeugen, wenn die Folie mit UV-Strahlung bestrahlt wird. Eine Sekundärfarbe ist hierbei eine weitere Farbe, die entsteht, wenn zwei unterschiedliche Farben gemischt bzw. deren Spektren addiert werden.

Gemäß einem zweiten Aspekt betrifft die Erfindung ein Verfahren zur Herstellung einer mehrschichtigen Folie gemäß dem ersten Aspekt. Das Verfahren umfasst die Schritte des Extrudierens eines Materials mit zumindest einem Laseradditiv, wodurch zumindest eine erste Schicht der Folie gebildet wird; des Extrudierens eines Materials mit zumindest einem fluoreszierendes Additiv, wodurch zumindest eine zweite Schicht der Folie gebildet wird; des Extrudierens eines Materials mit zumindest einem für UV-Strahlung undurchlässigen Bereich, wodurch zumindest eine dritte Schicht der Folie gebildet wird; und des Verbindens der einzelnen Schichten, wodurch eine mehrschichtige Folie gemäß dem ersten Aspekt gebildet wird. Darüber hinaus werden eine vierte Schicht und eine fünfte Schicht ausgehend von der dritten Schicht nacheinander in Richtung der Rückseite der Folie angeordnet, wobei die vierte Schicht oder/und die fünfte Schicht ein Laseradditiv umfasst und die vierte Schicht ein fluoreszierendes Additiv umfasst.

Vorzugsweise lassen sich die Verfahrensschritte gleichzeitig im Rahmen eines Koextrusionsverfahrens ausführen. Dies hat den Vorteil, dass die erfindungsgemäße Folie mit vorhandenen Werkzeugen ohne großen technischen Aufwand und ohne hohe Kosten zu verursachen hergestellt werden kann.

Gemäß einem dritten Aspekt betrifft die Erfindung einen Datenträger, insbesondere ein Wert- oder Identitätsdokument, umfassend ein Fensterelement, das mittels einer mehrschichtigen koextrudierten Folie gemäß dem ersten Aspekt realisiert ist. Vorzugsweise umfasst das Fensterelement ein durch die farblich unterschiedlichen fluoreszierenden Additive der Folienschichten realisiertes Sicherheitsmerkmal. Vorzugsweise umfasst das Fensterelement Daten, die mittels Laser in die Laseradditive umfassenden Schichten der Folie eingebracht werden.

Der Datenträger bildet insbesondere eine Ausweis-, Kredit-, Bank-, Barzahlungs- oder Berechtigungskarte, eine Chipkarte oder eine Personalisierungsdatenseite zur Einbindung in ein Passbuch.

Weitere Merkmale und Vorteile der Erfindung ergeben sich aus der folgenden Beschreibung erfindungsgemäßer Ausführungsbeispiele sowie weiteren Ausführungsalternativen im Zusammenhang mit den folgenden Zeichnungen, die zeigen:
- Figur 1: eine schematische Ansicht einer nicht erfindungsgemäßen mehrschichtigen Folie, wie sie aus dem Stand der Technik bekannt ist.
- Figur 2: eine schematische Ansicht einer erfindungsgemäßen mehrschichtigen Folie gemäß einer ersten Ausführungsform;
- Figur 3: eine schematische Ansicht einer erfindungsgemäßen mehrschichtigen Folie gemäß einer zweiten Ausführungsform;
- Figur 4: schematische Erscheinungsbilder erfindungsgemäßer Folien nach Anregung mit UV-Strahlung unter unterschiedlichen Betrachtungsbedingungen;
- Figur 5.1: Farbfotographien von bevorzugten Ausführungsformen eines erfindungsgemäßen Datenträgers
- Figur 5.2: Grauwertdarstellungen der Farbfotographien gemäß Fig. 5.1; und
- Figur 6: ein Teilaspekt eines erfindungsgemäßen Verfahrens.

In den genannten Figuren werden gleiche Bezugszeichen und Bezeichnungen für gleiche Elemente verwendet.

### DETAILIERTE BESCHREIBUNG

Fig. 1 zeigt einen schematischen Aufbau einer mehrschichtigen, durch Koextrusion hergestellten Folie 100. Die Folie 100 weist eine Vorderseite 101 und eine Rückseite 102 auf und umfasst drei Schichten 110, 120, 130, die beginnend auf der Vorderseite 101 nacheinander bzw. übereinanderliegend in Richtung der Rückseite 102 angeordnet sind. Eine solche Folie ist nicht Gegenstand der Erfindung und aus dem Stand der Technik bekannt.

Die Schichten 110, 120, 130 können aus thermoplastischen Materialien bestehen und unterschiedliche Eigenschaften aufweisen, die beispielsweise durch Verwenden verschiedener Additive und/oder UV-Blocker hervorgerufen werden. Insbesondere weist die erfindungsgemäße Folie einen mehrschichtigen Aufbau mit den Komponenten UV-Blocker, fluoreszierende Pigmente/Farbstoffe und Laseradditiv auf, wobei die einzelnen Komponenten in den jeweiligen Schichten unterschiedlich ausgeprägt angereichert bzw. vorhanden sein können.

So kann gemäß einer bevorzugten Ausführungsform die erste Schicht 110 einen Laseradditiv, die zweite Schicht 120 ein fluoreszierendes Additiv und die dritte Schicht 130 einen UV-Blocker enthalten.

Als UV-Blocker oder UV-Absorber, d.h. als ein für UV-Strahlung undurchlässiger Bereich, können bekannte Lichtstabilisatoren eingesetzt werden, wie beispielsweise Titandioxid oder Tinuvin.

Bei einer alternativen Ausführungsform ist die erste Schicht 110 farblos und transparent, die zweite Schicht 120 enthält ein Laseradditiv und die dritte Schicht 130 enthält einen UV-Blocker. Des Weiteren enthält die zweite Schicht 120 ein insbesondere farblich fluoreszierendes Additiv.

Durch die Zugabe eines Laseradditivs lassen sich mit einem optisch gesteuerten Laserstrahl dauerhafte Markierungen und/ oder Beschriftungen in die Folie flächenbegrenzt optimal einbringen. So lassen sich beispielsweise personalisierte Informationen in die Folie einbringen, wie zum Beispiel Personaldaten und/oder Fotos.

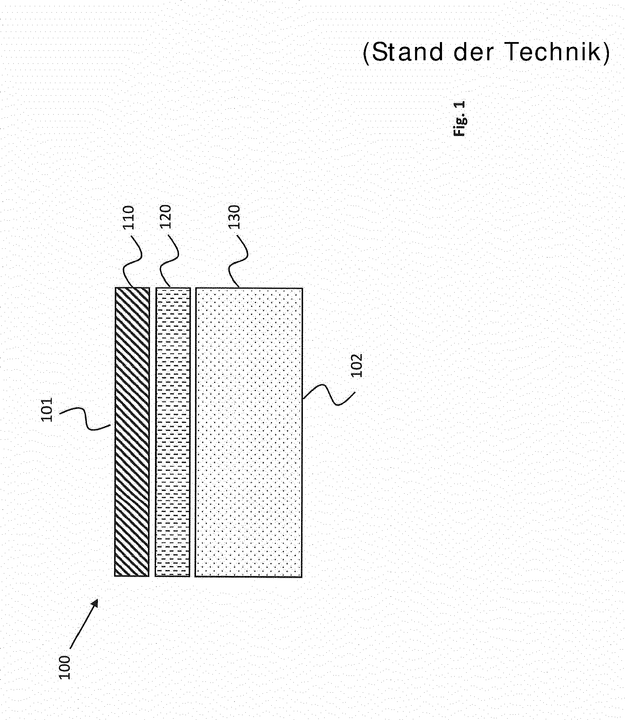

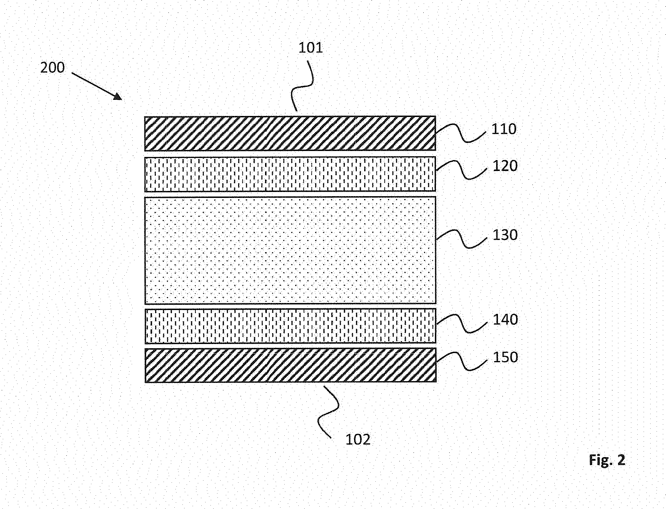

Fig. 2 zeigt einen schematischen Aufbau einer mehrschichtigen, durch Koextrusion hergestellten Folie 200 gemäß der Erfindung. Zusätzlich zu den in der Fig. 1 dargestellten drei Schichten enthält die Folie 200 eine vierte Schicht 140 und eine fünfte Schicht 150. Dabei sind die vierte Schicht 140 und die fünfte Schicht 150 unterhalb oder nach der dritten Schicht 130 in Richtung der Rückseite 102 der Folie 200 angeordnet, so dass die den UV-Blocker aufweisende dritte Schicht 130 zwischen der zweiten Schicht 120 und der vierten Schicht 140 angeordnet ist und die fünfte Schicht 150 die Rückseite 102 der Folie bildet.

Die vierte Schicht 140 oder/und die fünfte Schicht 150 umfasst ein Laseradditiv und die vierte Schicht 140 umfasst ein fluoreszierendes Additiv.

Dabei können die zweite Schicht 120 und die vierte Schicht 140 farblich unterschiedlich fluoreszierende Additive enthalten. Darüber hinaus können die erste Schicht 110 und die fünfte Schicht 150 ebenfalls farblich unterschiedlich fluoreszierende Additive umfassen. Alternativ können die erste Schicht 110 und die fünfte Schicht 150 farblos und transparent ausgestaltet sein, während die zweite 120 und die vierte Schicht 140 jeweils farblich unterschiedlich fluoreszierende Additive enthalten können.

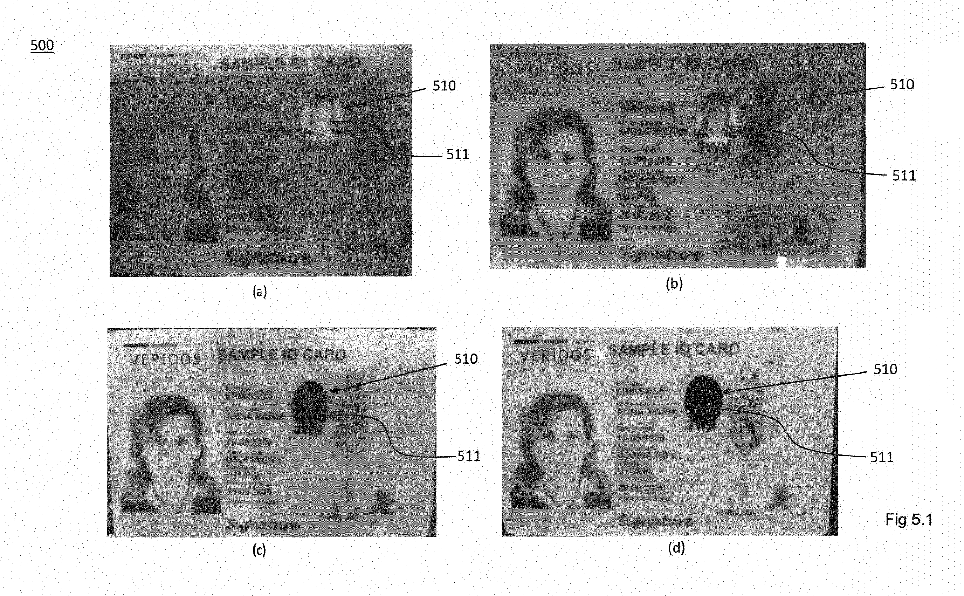

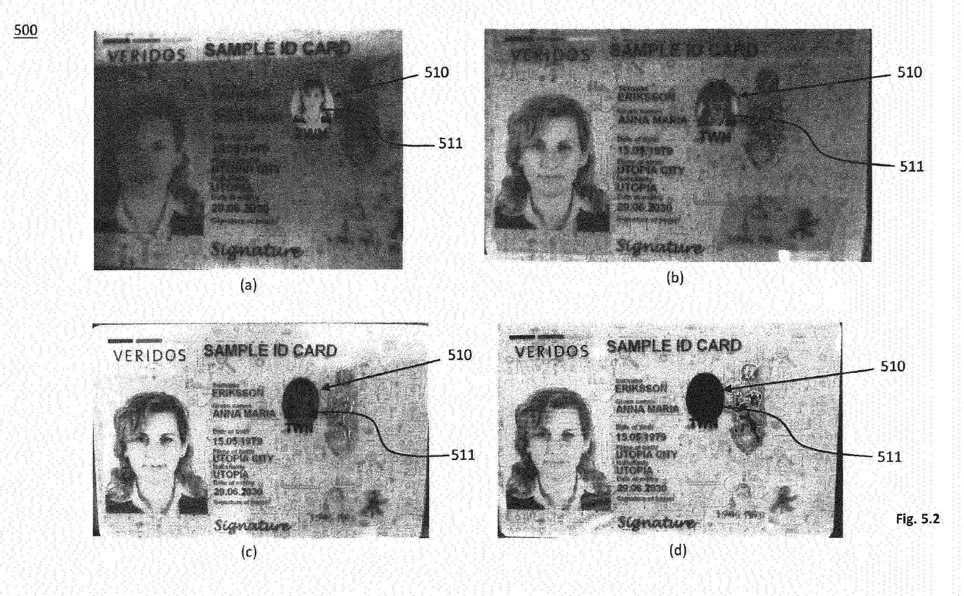

Durch Verwendung von zwei unterschiedlich fluoreszierenden Additiven leuchten unter UV-Licht die Vorderseite und die Rückseite der Folie farblich unterschiedlich, während die Information sichtbar gemacht wird, die mittels Laser in die mit einem Laseradditiv versehene Schicht eingebracht ist. Eine derart aufgebaute Folie kann als Einsatz für ein Fenster in einem Datenträger verwendet werden, wie weiter unten im Zusammenhang mit den Farbfotographien gemäß Fig. 5.1 bzw. deren Grauwertdarstellungen gemäß Fig. 5.2 erläutert wird.

In der in Figur 2 gezeigten Darstellung der erfindungsgemäßen Folie ist der für UV-Strahlung undurchlässige Bereich der dritten Schicht 130 durchgehend und erstreckt sich über die gesamte dritte Schicht.

Grundsätzlich wir durch die durchgehende Verteilung des UV-Blockers über die gesamte dritte Schicht 130 verhindert, dass bei Bestrahlung der Vorder- oder Rückseite 101, 102 der Folie mit UV-Strahlung die auf der jeweils gegenüberliegenden Seite angeordnete fluoreszierende Schicht zur Lumineszenz angeregt wird.

Jedoch kann, gemäß einer alternativen Ausgestaltung der erfindungsgemäßen Folie, die mit dem UV-Blocker versehene dritte Schicht 130 unterbrochen bzw. penetriert werden, um mindestens einen für UV-Strahlung durchlässigen Bereich in der dritten Schicht 130 zu bilden.

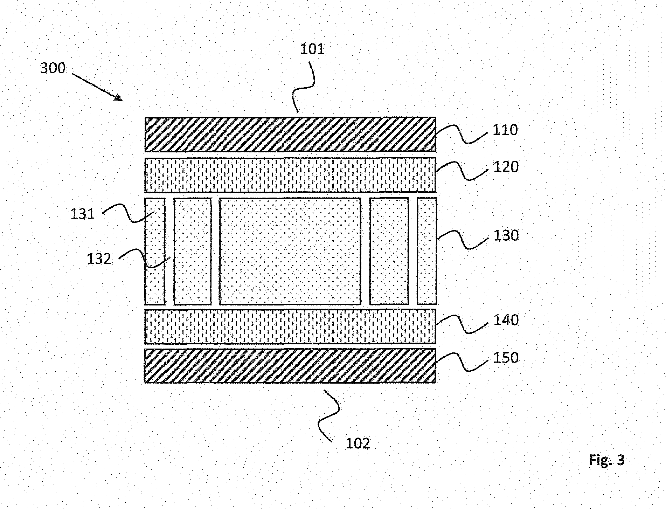

Fig. 3 zeigt eine Ausführungsform einer erfindungsgemäßen Folie bei der die dritte Schicht sowohl für UV-Strahlung undurchlässige also auch UV-durchlässige Bereiche aufweist.

Die in Fig. 3 gezeigte Folie 300 ist eine Streifenfolie, bei der die dritte Schicht 130 alternierend angeordnete für UV-Strahlung undurchlässige Bereiche 131 und für UV-Strahlung durchlässige Bereiche 132 aufweist. Andere Anordnungen der beiden Bereiche 131, 132 sind ebenfalls denkbar, wie beispielsweise beliebige Penetrationsmuster.

Eine derartige Streifenfolie kann im Koextrusionsverfahren mit mehreren Koextrusionseinheiten unter Verwendung von Divisoren hergestellt werden.

Des Weiteren können UV-Blocker-freie Bereiche durch Penetration der dritten Schicht 130 mittels Laserstrahlenbeschuss erzeugt werden, beispielsweise im Zuge der Einbringung personalisierter Daten in den Schichten der Folie, die Laseradditive enthalten.

Eine Penetration durch mechanische Perforation ist ebenfalls möglich.

Durch die Penetration des UV-Blockers entstehen sogenannte Durchlicht-Auflicht-Effekte, wie sie beispielsweise in Banknoten als Sicherheitsmerkmale zum Einsatz kommen.

Des Weiteren lässt sich im Zusammenhang mit farblich unterschiedlich fluoreszierenden Additiven der zweiten Schicht 120 und vierten Schicht 140 durch die Penetration der dazwischenliegenden dritten Schicht 130 eine Sekundärfarbe erzeugen, wenn die Folie 300 mit UV-Strahlung bestrahlt wird.

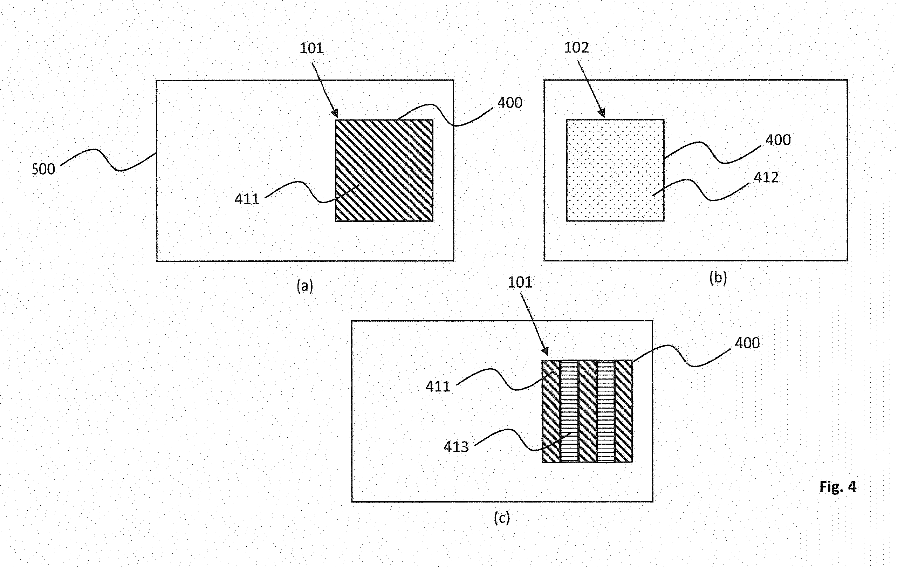

Fig. 4 zeigt unter unterschiedlichen Betrachtungsbedingungen schematisch konkrete Ausgestaltungen und Erscheinungsformen erfindungsgemäßer Folien nach Bestrahlung bzw. Anregung mit UV-Strahlung. Dabei wird die Folie 400 innerhalb eines Datenträgers 500 gezeigt, wobei der Datenträger 500 beispielsweise eine Banknote oder ein Personalausweis sein kann, wie anhand der Farbfotographien gemäß Fig. 5.1 bzw. deren Grauwertdarstellungen gemäß Fig. 5.2 gezeigt ist.

Bei der in den Figuren 4 (a) und (b) gezeigten Folie handelt es sich um eine mehrschichtige Folie 400, bei der die dritte Schicht durchgehend einen UV-Blocker enthält. Des Weiteren enthalten die zweite und die vierte Schicht unterschiedlich farbliche Fluoreszenz-Additive, z.B. rot und blau. Dabei zeigt Fig. 4 (a) die Folie 400 bei Betrachtung der Vorderseite 101 bei UV-Anregung auf der Vorderseite 101. Die Folie 400 leuchtet in einer ersten Fluoreszenzfarbe 411, z.B. in Rot, falls das fluoreszierende Additiv rote Farbpartikel enthält. Fig. 4 (b) zeigt die Folie 400 bei Betrachtung der Rückseite 102 bei UV-Anregung auf der Rückseite 102. Auch hier leuchtet die Folie, jetzt jedoch in einer zweiten Fluoreszenzfarbe 412, z.B. in Blau, entsprechend dem in der vierten Schicht enthaltenen Additiv.

Fig. 4 (c) zeigt eine weitere beispielhafte Folie 400, die sich von der Folie in den Fig. 4(a) und (b) dadurch unterscheidet, dass die dritte Schicht eine Streifenfolie ist, die Bereiche mit UV-Blocker und Bereiche ohne UV-Blocker umfasst, ähnlich der Folie 300 gemäß Fig. 3.

Ein neues Erscheinungsbild ergibt sich nun, wenn die Folie 400, wie auch in Fig. 4(a), von der Vorderseite 101 betrachtet wird, während sie auf der Vorderseite mit UV-Licht bestrahlt wird. In diesem Fall erscheint ein fluoreszierendes streifenförmiges Muster. Während die Streifen 411 in der ersten Fluoreszenzfarbe leuchten, also entsprechend dem farblichen Additiv der ersten oder zweiten Schicht, z.B. rot, treten die Streifen 413 mit einer dritten Fluoreszenzfarbe in Erscheinung, die sich durch Vermischen bzw. Addition der ersten Fluoreszenzfarbe und der Fluoreszenzfarbe der vierten oder fünften Schicht in den Bereichen ohne UV-Blocker ergibt. Vorliegend ist die dritte Farbe Magenta, die als Sekundärfarbe durch Vermischen / Addieren der Farben Rot und Blau während der UV-Anregung sichtbar wird.

Somit lassen sich durch die erfindungsgemäße Folie unter Bestrahlung mit UV-Strahlung nicht nur verschiedene Farben auf der Vorderseite und der Rückseite der Folie erzeugen, sondern auch unterschiedliche Farben auf einer Seite anordnen. Dies ermöglicht ein Sicherheitsmerkmal bzw. Sicherheitselement dadurch zu definieren, dass bestimmte Farben in bestimmten Mustern unter UV-Anregung sichtbar werden.

Die Fig. 5.1 zeigt vier Farbfotographien eines erfindungsgemäßen Datenträgers in Form eines Personalausweises. Diese Farbfotographien sind in ihrer farbigen Ausgestaltung Bestandteil der Prioritätsanmeldung beim Europäischen Patentamt und insofern auch hinsichtlich der dargestellten Farbeffekte Teil der Offenbarung der vorliegenden Erfindung. Aus Gründen der Reproduzierbarkeit zeigt die Fig. 5.2 zusätzlich Grauwertdarstellungen der vier Farbfotographien gemäß Fig. 5.1. Die Grauwertdarstellungen gemäß Fig. 5.2 ergeben sich derart aus den Farbfotographien gemäß Fig. 5.1, dass die in Fig. 5.1 gezeigten Farbmerkmale in Fig. 5.2 als entsprechende Grauwertintensitäten erkennbar sind.

Fig. 5.1 (a) und (b) bzw. Fig. 5.2 (a) und (b) zeigen einen erfindungsgemäßen Datenträger in Form eines Personalausweises 500. Der Datenträger 500 umfasst ein Fensterelement 510, das mittels einer mehrschichtigen koextrudierten Folie realisiert ist. Das Fensterelement 510 umfasst ein Sicherheitsmerkmal oder Sicherheitselement 511, das durch farblich unterschiedlich fluoreszierende Additive der Folienschichten realisiert ist und ein gelasertes Bild beinhaltet.

Fig. 5.1 (a) bzw. Fig. 5.2 (a) zeigt einen Datenträger umfassend eine Folie mit gelber Fluoreszenz, während Fig. 5.1 (b) bzw. Fig. 5.2 (b) einen Datenträger umfassend eine Folie mit blauer Fluoreszenz zeigt.

Bei den in Fig. 5.1 (c) und (d) bzw. Fig. 5.2 (c) und (d) gezeigten Datenträgern handelt es sich um Ausführungsformen, bei denen das Sicherheitselement 511 nur gelaserte Daten enthält. Fig. 5.1 (c) bzw. Fig. 5.2 (c) zeigt den Datenträger auf einer weißen Unterlage, während Fig. 5.1 (d) bzw. Fig. 5.2 (d) den Datenträger auf einer schwarzen Unterlage zeigt.

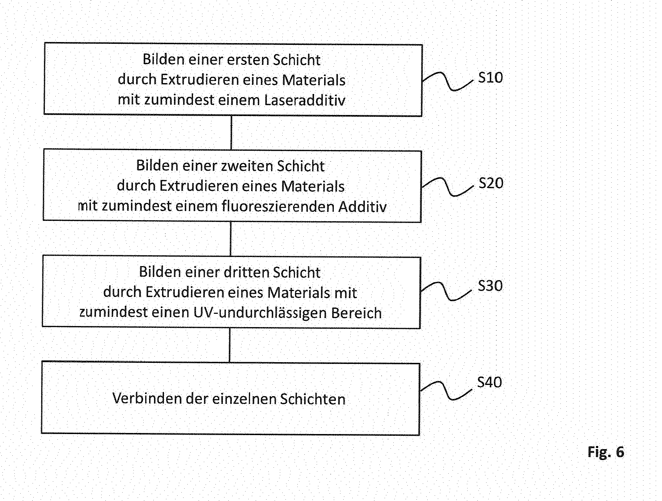

Der konkrete Aufbau der Folien und die Anordnung von Schichten mit unterschiedlich fluoreszierenden Additiven, Laseradditiven und/oder UV-Blockern, die die Farbeffekte gemäß Fig. 5.1 hervorrufen, ergibt sich im Zusammenhang mit den Figuren 2 bis 4. Die Fig. 5.2 illustriert diese Farbeffekte, indem die farblich unterschiedlich fluoreszierenden Fensterelemente 510 der Fig. 5.1 (a) und (b) in Fig. 5.2 (a) und (b) unterschiedliche und sich vom Hintergrund abhebende Grauwertintensitäten aufweisen und die weiße bzw. schwarze Unterlage der Fig. 5.1 (c) und (d) ebenfalls durch entsprechende Intensitätsunterschiede in den Fensterelementen 510 der Fig. 5.2 (c) und (d) erkennbar ist. Schließlich illustriert Fig. 6 die Schritte eines erfindungsgemäßen Verfahrens zur Herstellung einer mehrschichtigen Folie der beschriebenen, erfindungsgemäßen Art. Das Verfahren umfasst die Schritte des Extrudierens (S10) eines Materials mit zumindest einem Laseradditiv, wodurch zumindest die erste Schicht (110) gebildet wird; des Extrudierens (S20) eines Materials mit zumindest einem fluoreszierenden Additiv, wodurch zumindest die zweite Schicht (120) gebildet wird; des Extrudierens (S30) eines Materials mit zumindest einem für UV-Strahlung undurchlässigen Bereich, wodurch zumindest die dritte Schicht (130) gebildet wird; und des Verbindens (S40) der einzelnen Schichten, wodurch die mehrschichtige Folie gebildet wird. Die Schritte können gleichzeitig in einem Koextrusionsverfahren ausgeführt werden.

## Patentansprüche

1. Mehrschichtige koextrudierte Folie (100; 200; 300; 400) mit einer Vorderseite (101) und einer Rückseite (102), wobei die Folie zumindest drei Schichten umfasst, wobei eine erste Schicht (110) der zumindest drei Schichten oder/und eine zweite Schicht (120) der zumindest drei Schichten ein Laseradditiv umfasst, die zweite Schicht (120) ein fluoreszierendes Additiv umfasst und eine dritte Schicht (130) der zumindest drei Schichten einen für UV-Strahlung undurchlässigen Bereich umfasst,
**dadurch gekennzeichnet, dass** die Folie (100; 200; 300; 400) eine vierte Schicht (140) und eine fünfte Schicht (150) umfasst, wobei die vierte Schicht (140) und die fünfte Schicht (150) ausgehend von der dritten Schicht (130) nacheinander in Richtung der Rückseite (102) der Folie (100; 200; 300; 400) angeordnet sind, wobei die vierte Schicht (140) oder/und die fünfte Schicht (150) ein Laseradditiv umfasst und die vierte Schicht (140) ein fluoreszierendes Additiv umfasst.

2. Mehrschichtige Folie (100; 200; 300; 400) nach Anspruch 1, **dadurch gekennzeichnet, dass** die dritte Schicht (130) ein Laseradditiv umfasst.

3. Mehrschichtige Folie (100; 200; 300; 400) nach Anspruch 1 oder 2, **dadurch gekennzeichnet, dass** die erste Schicht (110) ein fluoreszierendes Additiv umfasst.

4. Mehrschichtige Folie (100; 200; 300; 400) nach einem der Ansprüche 1 bis 3, **dadurch gekennzeichnet, dass** die erste Schicht (110), die zweite Schicht (120) und die dritte Schicht (130) ausgehend von der Vorderseite (101) der Folie (100; 200; 300; 400) nacheinander in Richtung der Rückseite (102) der Folie (100; 200; 300; 400) angeordnet sind.

5. Mehrschichtige Folie (100; 200; 300; 400) nach Anspruch 4, **dadurch gekennzeichnet, dass** die zweite Schicht (120) und die vierte Schicht (140) farblich unterschiedlich fluoreszierende Additive umfassen.

6. Mehrschichtige Folie (100; 200; 300; 400) nach Anspruch 4 oder 5, **dadurch gekennzeichnet, dass** die erste Schicht (110) und die fünfte Schicht (150) farblich unterschiedlich fluoreszierende Additive umfassen.

7. Mehrschichtige Folie (100; 200; 300; 400) nach einem der Ansprüche 1 bis 6, **dadurch gekennzeichnet, dass** sich der für UV-Strahlung undurchlässige Bereich der dritten Schicht (130) über die gesamte dritte Schicht (130) erstreckt.

8. Mehrschichtige Folie (100; 200; 300; 400) nach einem der Ansprüche 1 bis 6, **dadurch gekennzeichnet, dass** die dritte Schicht (130) zumindest einen für UV-Strahlung durchlässigen Bereich (132) umfasst.

9. Mehrschichtige Folie (100; 200; 300; 400) nach Anspruch 8, **dadurch gekennzeichnet, dass** die dritte Schicht (130) zumindest einen weiteren für UV-Strahlung undurchlässigen Bereich umfasst, wobei die für UV-Strahlung durchlässigen Bereiche und die für UV-Strahlung undurchlässigen Bereiche alternierend angeordnet sind.

10. Verfahren zur Herstellung einer mehrschichtigen Folie (100; 200; 300; 400) mit einer Vorderseite (101) und einer Rückseite (102), wobei die Folie (100; 200; 300; 400) zumindest drei Schichten (110, 120, 130) umfasst, umfassend folgende Schritte:
- Extrudieren (S10) eines Materials mit zumindest einem Laseradditiv, wodurch zumindest eine erste Schicht (110) der zumindest drei Schichten gebildet wird;
- Extrudieren (S20) eines Materials mit zuminderst einem fluoreszierenden Additiv, wodurch zumindest eine zweite Schicht (120) der zumindest drei Schichten gebildet wird;
- Extrudieren (S30) eines Materials mit zumindest einem für UV-Strahlung undurchlässigen Bereich, wodurch zumindest eine dritte Schicht (130) der zumindest drei Schichten gebildet wird; und
- Verbinden (S40) der einzelnen Schichten (110, 120,130) zum Bilden der mehrschichtigen Folie (100; 200; 300; 400),
**dadurch gekennzeichnet, dass** eine vierte Schicht (140) und eine fünfte Schicht (150) ausgehend von der dritten Schicht (130) nacheinander in Richtung der Rückseite (102) der Folie (100; 200; 300; 400) angeordnet werden, wobei die vierte Schicht (140) oder/und die fünfte Schicht (150) ein Laseradditiv umfasst und die vierte Schicht (140) ein fluoreszierendes Additiv umfasst.

11. Verfahren nach Anspruch 10, **dadurch gekennzeichnet, dass** die Verfahrensschritte gleichzeitig in einem Koextrusionsverfahren ausgeführt werden.

12. Datenträger (500), insbesondere Wert- oder Identitätsdokument, umfassend ein Fensterelement (510), **dadurch gekennzeichnet, dass** das Fensterelement (510) mittels einer mehrschichtigen koextrudierten Folie (100; 200; 300; 400) nach einem der Ansprüche 1 bis 9 realisiert ist.

13. Datenträger (500) nach Anspruch 12, **dadurch gekennzeichnet, dass** das Fensterelement (510) ein Sicherheitselement umfasst, das durch die farblich unterschiedlichen fluoreszierenden Additive der zumindest drei Schichten (110, 120, 130) der koextrudierten Folie (100; 200; 300; 400) gebildet ist.

14. Datenträger (500) nach einem der Ansprüche 12 oder 13, **dadurch gekennzeichnet, dass** das Fensterelement (510) Daten umfasst, die mittels Laser in die Laseradditiv umfassenden Schichten eingebracht sind.

## Claims

1. Multilayer coextruded film (100; 200; 300; 400) having a front side (101) and a back side (102), where the film comprises at least three layers, with a first layer (110) of the at least three layers or/and a second layer (120) of the at least three layers comprising a laser additive, the second layer (120) comprising a fluorescent additive and a third layer (130) of the at least three layers comprising a region which is opaque to UV radiation,
**characterized in that** the film (100; 200; 300; 400) comprises a fourth layer (140) and a fifth layer (150), where the fourth layer (140) and the fifth layer (150), starting from the third layer (130), are arranged successively in the direction of the back side (102) of the film (100; 200; 300; 400), with the fourth layer (140) or/and the fifth layer (150) comprising a laser additive and the fourth layer (140) comprising a fluorescent additive.

2. Multilayer film (100; 200; 300; 400) according to Claim 1, **characterized in that** the third layer (130) comprises a laser additive.

3. Multilayer film (100; 200; 300; 400) according to Claim 1 or 2, **characterized in that** the first layer (110) comprises a fluorescent additive.

4. Multilayer film (100; 200; 300; 400) according to any of Claims 1 to 3, **characterized in that** the first layer (110), the second layer (120) and the third layer (130), starting from the front side (101) of the film (100; 200; 300; 400), are arranged successively in the direction of the back side (102) of the film (100; 200; 300; 400).

5. Multilayer film (100; 200; 300; 400) according to Claim 4, **characterized in that** the second layer (120) and the fourth layer (140) comprise different-coloured fluorescent additives.

6. Multilayer film (100; 200; 300; 400) according to Claim 4 or 5, **characterized in that** the first layer (110) and the fifth layer (150) comprise different-coloured fluorescent additives.

7. Multilayer film (100; 200; 300; 400) according to any of Claims 1 to 6, **characterized in that** the region of the third layer (130) which is opaque to UV radiation extends over the entire third layer (130).

8. Multilayer film (100; 200; 300; 400) according to any of Claims 1 to 6, **characterized in that** the third layer (130) comprises at least one region (132) which is transparent to UV radiation.

9. Multilayer film (100; 200; 300; 400) according to Claim 8, **characterized in that** the third layer (130) comprises at least one further region which is opaque to UV radiation, with the regions which are transparent to UV radiation and the regions which are opaque to UV radiation being arranged in alternation.

10. Method for producing a multilayer film (100; 200; 300; 400) having a front side (101) and a back side (102), where the film (100; 200; 300; 400) comprises at least three layers (110, 120, 130), comprising steps as follows:
- extruding (S10) a material with at least one laser additive, to form at least a first layer (110) of the at least three layers;
- extruding (S20) a material with at least one fluorescent additive, to form at least a second layer (120) of the at least three layers;
- extruding (S30) a material with at least one region which is opaque to UV radiation, to form at least a third layer (130) of the at least three layers; and
- connecting (S40) the individual layers (110, 120, 130) to form the multilayer film (100; 200; 300; 400),
**characterized in that** a fourth layer (140) and a fifth layer (150), starting from the third layer (130), are arranged successively in the direction of the back side (102) of the film (100; 200; 300; 400), with the fourth layer (140) or/and the fifth layer (150) comprising a laser additive and the fourth layer (140) comprising a fluorescent additive.

11. Method according to Claim 10, **characterized in that** the method steps are performed simultaneously in a coextrusion process.

12. Data carrier (500), in particular document of value or identity, comprising a window element (510), **characterized in that** the window element (510) is realized by means of a multilayer coextruded film (100; 200; 300; 400) according to any of Claims 1 to 9.

13. Data carrier (500) according to Claim 12, **characterized in that** the window element (510) comprises a security element which is formed by the different-coloured fluorescent additives of the at least three layers (110, 120, 130) of the coextruded film (100; 200; 300; 400).

14. Data carrier (500) according to either of Claims 12 and 13, **characterized in that** the window element (510) comprises data introduced by laser into the layers comprising laser additive.

## Revendications

1. Feuille coextrudée multicouche (100 ; 200 ; 300 ; 400) ayant un recto (101) et un verso (102), la feuille comprenant au moins trois couches, la première couche (110) des au moins trois couches et/ou une deuxième couche (120) des au moins trois couches comprenant un additif laser, la deuxième couche (120) comprenant un additif fluorescent et la troisième couche (130) des au moins trois couches comprenant une zone imperméable au rayonnement UV,
**caractérisée en ce que** la feuille (100 ; 200 ; 300 ; 400) comprend une quatrième couche (140) et une cinquième couche (150), la quatrième couche (140) et la cinquième couche (150) étant disposées l'une derrière l'autre, en partant de la troisième couche (130), dans la direction du verso (102) de la feuille (100 ; 200 ; 300 ; 400), la quatrième couche (140) et/ou la cinquième couche (150) comprenant un additif laser et la quatrième couche (140) comprenant un additif fluorescent.

2. Feuille multicouche (100 ; 200 ; 300 ; 400) selon la revendication 1, **caractérisée en ce que** la troisième couche (130) comprend un additif laser.

3. Feuille multicouche (100 ; 200 ; 300 ; 400) selon la revendication 1 ou 2, **caractérisée en ce que** la première couche (110) comprend un additif fluorescent.

4. Feuille multicouche (100 ; 200 ; 300 ; 400) selon l'une des revendications 1 à 3, **caractérisée en ce que** la première couche (110), la deuxième couche (120) et la troisième couche (130) sont disposées l'une derrière l'autre, en partant du recto (101) de la feuille (100 ; 200 ; 300 ; 400), dans la direction du verso (102) de la feuille (100 ; 200 ; 300 ; 400).

5. Feuille multicouche (100 ; 200 ; 300 ; 400) selon la revendication 4, **caractérisée en ce que** la deuxième couche (120) et la quatrième couche (140) comprennent des additifs fluorescents à couleurs différentes.

6. Feuille multicouche (100 ; 200 ; 300 ; 400) selon la revendication 4 ou 5, **caractérisée en ce que** la première couche (110) et la cinquième couche (150) comprennent des additifs fluorescents à couleurs différentes.

7. Feuille multicouche (100 ; 200 ; 300 ; 400) selon l'une des revendications 1 à 6, **caractérisée en ce que** la zone de la troisième couche (130) imperméable au rayonnement UV s'étend sur la totalité de la troisième couche (130).

8. Feuille multicouche (100 ; 200 ; 300 ; 400) selon l'une des revendications 1 à 6, **caractérisée en ce que** la troisième couche (130) comprend au moins une zone (132) perméable au rayonnement UV.

9. Feuille multicouche (100 ; 200 ; 300 ; 400) selon la revendication 8, **caractérisée en ce que** la troisième couche (130) comprend au moins une autre zone imperméable au rayonnement UV, les zones perméables au rayonnement UV et les couches imperméables au rayonnement UV étant disposées en alternance.

10. Procédé de fabrication d'une feuille multicouche (100 ; 200 ; 300 ; 400) ayant un recto (101) et un verso (102), la feuille (100 ; 200 ; 300 ; 400) comprenant au moins trois couches (110, 120, 130), comprenant les étapes suivantes :
- extrusion (S10) d'un matériau avec au moins un additif laser, pour former au moins une première couche (110) des au moins trois couches ;
- extrusion (S20) d'un matériau avec au moins un additif fluorescent, avec formation d'au moins une deuxième couche (120) des au moins trois couches ;
- extrusion (S30) d'un matériau avec au moins une zone imperméable au rayonnement UV, avec formation d'au moins une troisième couche (130) des au moins trois couches ; et
- liaison (S40) des couches individuelles (110, 120, 130) pour former la feuille multicouche (100 ; 200 ; 300 ; 400),
**caractérisé en ce qu'**une quatrième couche (140) et une cinquième couche (150) sont disposées les unes après les autres, à partir de la troisième couche (130), dans la direction du verso (102) de la feuille (100 ; 200 ; 300 ; 400), la quatrième couche (140) et/ou la cinquième couche (150) comprenant un additif laser et la quatrième couche (140) comprenant un additif fluorescent.

11. Procédé selon la revendication 10, **caractérisé en ce que** les étapes du procédé sont mises en œuvre simultanément dans un procédé de coextrusion.

12. Support de données (500), en particulier document de valeur ou d'identité, comprenant un élément fenêtre (510), **caractérisé en ce que** l'élément fenêtre (510) est réalisé avec une feuille coextrudée multicouche (100 ; 200 ; 300 ; 400) selon l'une des revendications 1 à 9.

13. Support de données (500) selon la revendication 12, **caractérisé en ce que** l'élément fenêtre (510) comprend un élément de sécurité, qui est formé par les additifs fluorescents à couleurs différentes des au moins trois couches (110, 120, 130) de la feuille coextrudée (100 ; 200 ; 300 ; 400).

14. Support de données (500) selon l'une des revendications 12 ou 13, **caractérisé en ce que** l'élément fenêtre (510) comprend des données qui sont introduites par laser dans les couches comprenant l'additif laser.
